# EUROPÄISCHE PATENTANMELDUNG

(11) **EP 4 418 159 A1**
(43) Veröffentlichungstag der Anmeldung: **21.08.2024**
(21) Anmeldenummer: 23157083.9
(22) Anmeldetag: 16.02.2023
(51) Int. Cl.: G06F 21/71, G06F 21/78

(54) **BETRIEBSSYSTEM FÜR EINE RECHENEINHEIT MIT EINEM PROZESSOR MIT INTERNEM ARBEITSSPEICHERBEREICH FÜR EIN BESTIMMTES NUTZERPROGRAMM**

(71) Anmelder: Siemens Aktiengesellschaft, 80333 München (DE)
(72) Erfinder: Falk, Rainer, 85586 Poing (DE); Feist, Christian Peter, 80689 München (DE); Hornung, Peter, 91054 Erlangen (DE); Mantel, Martin, 91325 Adelsdorf (DE); Pyka, Stefan, 85570 Markt Schwaben (DE); Sperl, Franz, 92526 Oberviechtach (DE); Zeschg, Thomas, 81543 München (DE)
(74) Vertreter: Siemens Patent Attorneys

(57) **Zusammenfassung**

Die Erfindung betrifft ein Betriebssystem (5) für eine Recheneinheit (1), wobei das Betriebssystem (5) ausgebildet ist, ein erstes Nutzerprogramm (4) und ein zweites Nutzerprogramm auszuführen, wobei dem ersten Nutzerprogramm (4) eine Berechtigung zugeordnet ist, wobei dem zweiten Nutzerprogramm die Berechtigung nicht zugeordnet ist, wobei die Recheneinheit (1) einen Prozessorbaustein (2) mit einem internen Arbeitsspeicher (L1, L2, 21) aufweist, wobei das Betriebssystem (5) ausgebildet ist, dem ersten Nutzerprogramm einen Zugriff auf den internen Arbeitsspeicher (L1, L2, 21) über einen Betriebssystemaufruf (6) bereitzustellen, wobei der Zugriff auf den internen Arbeitsspeicher (L1, L2, 21) die Berechtigung des ersten Nutzerprogramms (4) voraussetzt.

Außerdem betrifft die Erfindung eine Recheneinheit (1) aufweisend einen erfindungsgemäßen Prozessor und ein zugehöriges Verfahren.

## Beschreibung

Unabhängig vom grammatikalischen Geschlecht eines bestimmten Begriffes sind Personen mit männlicher, weiblicher oder anderer Geschlechteridentität mit umfasst.

### HINTERGRUND DER ERFINDUNG

### Gebiet der Erfindung

Die vorliegende Erfindung betrifft einen Prozessor für eine Recheneinheit. Die Erfindung betrifft außerdem eine Recheneinheit aufweisend einen erfindungsgemäßen Prozessor und ein zugehöriges Verfahren.

### Beschreibung des Stands der Technik

Auf offenen Compute-Plattformen sind üblicherweise ein Prozessorbaustein (insbesondere eine CPU), externe Arbeitsspeichermodule (insbesondere ein RAM, DRAM oder SRAM) und Festplattenspeicher (insbesondere eine SSD oder HDD) vorhanden. Manche ausgeführten Nutzerprogramme (auch als Applikation, App oder Prozess im User Space bezeichenbar) verarbeiten sensible Daten wie kryptographische Schlüssel oder Passwörter, die im Arbeitsspeicher (insbesondere ein RAM, DRAM oder SRAM) liegen.

Es kann zwar mit heute verfügbaren Betriebssystemmitteln ein Auslagern solcher sensiblen Speicherbereiche auf eine Festplatte (insbesondere eine SSD oder HDD) verhindert werden, die Daten stehen aber im Klartext im Arbeitsspeicher (insbesondere ein RAM, DRAM oder SRAM) und sind damit für lokale Angreifer grundsätzlich auslesbar (insbesondere über einen Buszugriff oder Cold-Boot-Angriff). Eine durchgängige Verschlüsselung von "data in use" (insbesondere im Rahmen von "confidential computing", "full memory encryption") wird derzeit nur in Ausnahmefällen angewendet, und erfordert spezielle Unterstützung durch den Prozessorbaustein (insbesondere eine CPU). Chip-interne Speicherbereiche in einem Prozessorbaustein (insbesondere ein Cache, on-chip RAM (auch als in-chip RAM bezeichenbar)) können auf manchen eingebetteten Geräten als Chip-interner Arbeitsspeicher (insbesondere ein RAM, DRAM oder SRAM) verwendet werden. Dies erfordert allerdings, dass das eingebettete System speziell aufgesetzt wird und ist so auf offenen Compute-Plattformen heute technisch nicht umsetzbar.

Aus dem Stand der Technik bekannt ist eine Speicherverwaltung von Arbeitsspeicher (RAM) für Nutzerprogramme (User Space, Apps) als eine grundlegende Funktion eines Betriebssystems. Ein ausgeführtes Nutzerprogramm, d.h. ein vom Betriebssystem verwalteter Prozess, kann zur Laufzeit dynamisch Arbeitsspeicher anfordern. Dabei kann im Stand der Technik lediglich festgelegt werden, ob ein Arbeitsspeicherbereich vom Betriebssystem auf eine Festplatte ausgelagert werden darf, oder ob er im realen, physikalisch vorhandenen Arbeitsspeicher (RAM) verbleiben muss (siehe z.B. mlock() in Linux).

Weiterhin ist im Stand der Technik bei eingebetteten Systemen bzw. als Firmware bekannt, dass ein Chip-interner Speicher (Cache, on-chip RAM, in-chip RAM) für Sonderzwecke fest reserviert und verwendet werden kann. Dabei kann aber nur spezielle, vorab als solche bekannte Software mit speziellen Echtzeit- oder Security-Anforderungen ein solcher Speicherbereich fest während der Entwicklung des Geräts zugeordnet werden (siehe z.B. Texas Instruments, "SimpleLink^{™} CC13x2 / CC26x2 SDK Proprietary RF User's Guide 2.70.0", Abschnitt "Using the Cache as RAM").

Manche Crypto-Bibliotheken, z.B. gpg und gcrypt, implementieren eigene Funktionen für einen sicheren Speicher (secure memory), siehe z.B. gnupg: "If you have to protect your keys or other information in memory against being swapped out to disk and to enable an automatic overwrite of used and freed memory, you need to initialize Libgcrypt this way". Nach dieser Beschreibung wird dabei lediglich verhindert, dass die entsprechenden Speicherbereiche auf Festplatte ausgelagert werden (swapping, paging), und der Speicher wird automatisch überschrieben, wenn er wieder freigegeben wird.

Die Bibliothek secmalloc ist eine C-Bibliothek zur Speicherverwaltung, die ein Auslagern der über sie reservierten Speicherbereiche auf Festplatte verhindert.

Von memguard ist eine GO-Bibliothek bekannt, die einen Speicherbereich kryptographisch schützt ("Sensitive data is encrypted and authenticated in memory with XSalsa20Poly1305.", "Effort is taken to prevent sensitive data from touching the disk."). Dabei wird der im Arbeitsspeicher abgelegte Speicherinhalt jedoch bei Bedarf entschlüsselt und liegt somit temporär im Klartext im Arbeitsspeicher vor.

Außerdem ist Teil des Stands der Technik: Ning Zhang; Kun Sun; Wenjing Lou; Y. Thomas Hou, "CaSE: Cache-Assisted Secure Execution on ARM Processors", 2016 IEEE Symposium on Security and Privacy (SP), 22-26 May 2016. Dabei wird "Cache-as-RAM" und ARM TrustZone in Kombination verwendet, sodass der von der Secure-World-Ausführungsumgebung (Trusted Execution Environment, TEE) verwendete Arbeitsspeicher im Chip vorliegt. D.h. es wird der auf einem Prozessor vorhandene Cache-Speicher teilweise als Arbeitsspeicher verwendet. Die gesamte Applikation muss daher im Cache-Speicher geladen sein. Diese Lösung hat den Nachteil, dass sie nur für das Trusted Execution Environment greift, und dass sie nur für Security-Anwendungen anwendbar ist, die vollständig in den Cache-Speicherbereich passen. Außerdem muss das Prozessorsystem speziell in dieser Konfiguration aufgesetzt werden ("CaSE creates an execution environment inside the ARM processor by loading and executing an application completely within the CPU cache.").

Bei Sentry ist eine feste Verschlüsselungsfunktion im Chip (Cache, internal RAM) realisiert, die Arbeitsspeicherbereiche verschlüsselt bzw. entschlüsselt, wenn das Mobilgerät gesperrt bzw. entsperrt wird: "Sentry, a system that allows applications and OS components to store their code and data on the System-on-Chip (SoC) rather than in DRAM. We use ARMspecific mechanisms originally designed for embedded systems, but still present in today's mobile devices, to protect applications and OS subsystems from memory attacks."

Das Patent US10061718B2 Protecting secret state from memory attacks (Microsoft) bezieht sich auf Sentry.
What is claimed is: 1. In a computing environment, a method comprising:
maintaining protected data in on-System on Chip (SOC) secure storage, wherein the protected data comprises at least a secret state and access-protected data;
evicting at least some portion of the access-protected data to unsecure storage, the secret state not being allowed to be written to unsecure storage, the access-protected data only being accessed while stored in the on-SoC secure storage;
performing encryption or decryption processing on the access-protected data in the on-SoC secure storage, including accessing the on-SoC secure storage to access the secret state such that the secret state is not written to the unsecure storage; and
restoring the evicted access-protected data to the on-SoC secure storage.

Bei Betriebssystemen wie z.B. Unix, Linux, Windows wird ein Swapping unterstützt (technisch exakt wäre der Begriff "Paging", in der Praxis wird aber oft der Begriff Swapping verwendet; Swapping würde sich genaugenommen darauf beziehen, dass ein Prozess als Ganzes auf Festplatte ausgelagert wird, nicht nur einzelne Speicher-Pages). Dabei werden Inhalte (Pages) des RAM-Arbeitsspeichers eines Prozesses auf Festplatte ausgelagert. Dies betrifft üblicherweise nur User-Space-RAM-Speicher, nicht jedoch den durch das Betriebssystem (Betriebssystem-Kernel) belegten Arbeitsspeicher. Es ist jedoch möglich, dass bei einem Suspend oder einer Hibernation des Systems der gesamte Arbeitsspeicher einer Maschine einschließlich Kernel-Speicherbereichen auf eine Festplatte ausgelagert wird. Das System kann dann bei einem Resume wieder schnell hochlaufen, indem der so gesicherte Arbeitsspeicherinhalt zurück in den Arbeitsspeicher geladen wird. Es ist dabei dann kein Neustart des Betriebssystems erforderlich. Es ist bekannt, dass das Auslagern eines einzelnen Arbeitsspeicherbereichs auf Festplatte gesperrt werden kann, z.B. von IBM z/OS und Linux: "lock(), mlock2(), and mlockall() lock part or all of the calling process's virtual address space into RAM, preventing that memory from being paged to the swap area.". Dabei sind auch Anwendungsmöglichkeiten beschrieben. Neben Echtzeit-Optimierungen wird auch eine Verwendung für Security-Zwecke beschrieben, um das Auslagern von Schlüsseln oder Passwörtern, die im Arbeitsspeicher stehen, auf Festplatte zu verhindern.

Manche Intel-Prozessoren (Intel Xeon Processor E5 v4 Family) unterstützen eine sogenannte Cache Allocation Technology CAT. Dabei kann über Software die Größe des Last-Level-Cache-Speichers beeinflusst werden, die durch einen bestimmten Thread, App, virtuelle Maschine oder Container belegt werden kann. Dadurch kann verhindert werden, dass der Last-Level-Cache für einzelne bestimmte Applikationen übermäßig belegt wird und dass es somit zu Performance-Einbußen für andere Applikationen kommt. Dabei können Bereiche des Last-Level-Caches auch einer einzelnen Applikation zugeordnet werden. Es geht dabei aber allgemein um die Belegung von Cache-Speicher durch eine Applikation, nicht darum, dass ein bestimmter Speicherbereich einer Applikation im Cache vorgehalten werden muss.

Bei der darauf aufsetzenden Intel Code and Data Prioritization Technologie (CDP) können weiterhin die Cache-Nutzung durch Programmcode und durch Daten unterschieden werden.

Von Forschungsarbeiten an der FAU Erlangen ist durch "TRESOR" bekannt, eine Verschlüsselung so zu implementieren, dass der dabei verwendete Schlüssel nur in der CPU in Registern liegt, nicht im Arbeitsspeicher. Konkret werden Debug-Register als Schlüsselspeicher verwendet. Die Lösung ist in der Publikation "TRESOR Runs Encryption Securely Outside RAM, USENIX Security 2011, beschrieben.

Allgemein ist bekannt, dass ein Nutzerprogramm Speicher dynamisch allokieren kann (z.B. über malloc), oder dass ein Nutzerprogramm einen Shared-Memory-Speicherbereich anfordern kann, über den eine Interprozesskommunikation erfolgen kann.

Es ist bekannt, dass der Cache eines Prozessors in einen Betriebssystem-Device-Tree abgebildet werden kann. Darüber kann zwar aus einem Nutzerprogramm Information zu den auf einem Prozessor vorhandenen Caches erhalten werden, es kann aber nicht direkt ein Cache-Speicher als Arbeitsspeicher verwendet werden.

Die Aufgabe der Erfindung besteht darin, eine Lösung für eine sicherere Verwendung von Nutzerprogrammen auf offenen Compute-Plattformen bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft Betriebssystem für eine Recheneinheit,
wobei das Betriebssystem ausgebildet ist, ein erstes Nutzerprogramm und ein zweites Nutzerprogramm auszuführen,
wobei dem ersten Nutzerprogramm eine Berechtigung zugeordnet ist,
wobei dem zweiten Nutzerprogramm die Berechtigung nicht zugeordnet ist,
wobei die Recheneinheit einen Prozessorbaustein mit einem internen Arbeitsspeicher aufweist,
wobei das Betriebssystem ausgebildet ist, dem ersten Nutzerprogramm einen Zugriff auf den internen Arbeitsspeicher über einen Betriebssystemaufruf bereitzustellen,
wobei der Zugriff auf den internen Arbeitsspeicher die Berechtigung des ersten Nutzerprogramms voraussetzt.

Abhängig von der Berechtigung ist somit definiert, ob der interne Arbeitsspeicher (insbesondere ein On-Chip-Speicher) genutzt werden darf.

Der Zugriff durch das erste Nutzerprogramm auf den internen Arbeitsspeicher kann auch als ein indirekter Zugriff bezeichnet werden, da der Zugriff den Betriebssystemaufruf und somit das Zutun des Betriebssystems voraussetzt. Das Nutzerprogramm greift also indirekt über das Betriebssystem auf den internen Arbeitsspeicher des Prozessorbausteins zu, indem es eine Betriebssystemfunktion für den Speicherzugriff aufruft. Über einen Betriebssystemaufruf kann das Nutzerprogramm insbesondere ein Datenelement in den internen Arbeitsspeicher schreiben oder aus dem internen Arbeitsspeicher lesen. Ein gelesenes Datenelement kann dabei vom internen Arbeitsspeicher des Prozessors in ein Register eines Rechenkerns des Prozessors über einen Betriebssystemaufruf übertragen werden. Ein geschriebenes Datenelement kann außerdem von dem Register eines Rechenkerns des Prozessors in den internen Arbeitsspeicher des Prozessors über einen Betriebssystemaufruf übertragen werden. Das Betriebssystem prüft bei dem Speicherzugriff die Berechtigung. Das Betriebssystem überprüft somit die Berechtigung des ersten Nutzerprogramms, ein Übertragen eines Datenelements zwischen dem internen Arbeitsspeicher des Prozessors und einem Register eines Rechenkerns des Prozessors durchzuführen. Ein Datenelement kann weiterhin von einem Speicherbereich des internen Arbeitsspeichers des Prozessors in einen anderen Speicherbereich des Prozessors über einen Betriebssystemaufruf kopiert oder verschoben werden. Das Betriebssystem überprüft somit die Berechtigung eines Nutzerprogramms, das Kopieren oder Übertragen eines Datenelements zwischen Speicherbereichen des internen Arbeitsspeichers des Prozessors durchzuführen. Weiterhin kann das erste Nutzerprogramm den Wert einer Variable des ersten Nutzerprogramms, die im externen Arbeitsspeicher abgelegt ist, in den internen Arbeitsspeicher des Prozessors über einen Betriebssystemaufruf übertragen, oder umgekehrt ein Datenelement des internen Arbeitsspeichers in eine Variable des Nutzerprogramms, die in einem externen Arbeitsspeicher abgelegt ist. Das Betriebssystem überprüft somit die Berechtigung eines Nutzerprogramms, die Übertragung eines Datenelements zwischen dem internen Arbeitsspeicher des Prozessors und einer im externen Arbeitsspeicher abgelegten Variable des Nutzerprogramms durchzuführen. Auf einen externen Arbeitsspeicher der Recheneinheit greift das Nutzerprogramm dagegen direkt zu, d.h. nicht über das Betriebssystem. Hier kann, wie im Stand der Technik bekannt, eine Hardware-basierte Speicherverwaltungseinheit (Memory Management Unit MMU) einen Zugriff auf den externen Arbeitsspeicher verwalten. In diesem Fall prüft das Betriebssystem jedoch nicht die Berechtigung bei einem Speicherzugriff.

Der Zugriff ist insbesondere auf einen Teilbereich des internen Arbeitsspeichers möglich.

Der Prozessorbaustein ist auch als ein Prozessor bezeichenbar. Der interne Arbeitsspeicher, auch als integrierter Arbeitsspeicher bezeichenbar, ist Bestandteil des Prozessors, er befindet sich somit intern im Prozessorbaustein. In einer weiteren Weiterbildung der Erfindung ist der Prozessor als eine Central Processing Unit (CPU) ausgebildet.

Der interne Arbeitsspeicher befindet sich innerhalb des Prozessors. Er ist zu unterscheiden von einem separaten Arbeitsspeicher, auch als separater Arbeitsspeicherbaustein oder externer Arbeitsspeicher bezeichenbar, welcher sich dagegen außerhalb des Prozessorbausteins, aber innerhalb der Recheneinheit, befindet.

Die Recheneinheit ist insbesondere als ein Computersystem, ein Computer-Gerät und/oder ein Compute device ausgebildet.

Das erste Nutzerprogramm ist auch als ein im Nutzerraum (U-ser-Space) ausgeführter (erster) Prozess, eine (erste) Applikation oder eine (erste) App bezeichenbar.

Der Zugriff auf den internen Arbeitsspeicher umfasst, dass der interne Arbeitsspeicher ausgebildet ist, von dem ersten Nutzerprogramm genutzt und/oder verwaltet, zu werden. Insbesondere ist der interne Arbeitsspeicher ausgebildet, dass durch das erste Nutzerprogramm ein (geschütztes) Ablegen und/oder Auslesen (wieder Zurücklesen) von Daten erfolgt. Der Zugriff kann einen Schreibzugriff oder einen Lesezugriff auf den internen Arbeitsspeicher betreffen, und/oder eine Reservierung oder eine Freigabe oder ein Löschen (Zeroization) eines Speicherbereichs des internen Arbeitsspeichers. Der Zugriff durch das erste Nutzerprogramm erfolgt dabei über den Betriebssystemaufruf.

Aus der Erfindung ergibt sich der Vorteil, dass der Prozessor-interne Speicherbereich, der interne Arbeitsspeicher, durch das erste Nutzerprogramm dynamisch verwendbar ist, wobei der interne Arbeitsspeicher im Vergleich zu einem dem Prozessor externem (separaten) Arbeitsspeicher insbesondere besonders hohen Anforderungen bezüglich Sicherheit oder Echtzeitfähigkeit genügt. Eine dynamische Verwendung bedeutet, dass das Anfordern eines Zugriffes auf einen Chip-internen Speicher, den interne Arbeitsspeicher, während der Laufzeit durch das erste Nutzerprogramm erfolgt. Es kann sich somit im laufenden Betrieb ändern, welche Nutzerprogramme welche Prozessor-internen Speicherbereiche in welchem Zeitraum nutzen können.

Diese erfindungsgemäßen Funktionalitäten, insbesondere dass der interne Arbeitsspeicher ausgebildet ist, nur von dem mindestens einem Nutzerprogramm angefordert zu werden, ist fest in dem Betriebssystem (OS) integriert oder über ein Betriebssystem-Modul (Linux Kernel Modul) realisiert.

Ein Aspekt der Erfindung besteht somit darin, dass für offenen Compute-Plattformen ein sicherer CPU-interner Speicherbereich bereitgestellt wird, welcher nur von speziellen Nutzerprogrammen genutzt werden kann. Dadurch kann das Schutzniveau gegenüber lokalen, physikalischen Angreifern erhöht werden, da kritische Daten wie beispielsweise Schlüssel oder Passwörter nicht in dem relativ leicht zugreifbaren separaten Arbeitsspeicherbaustein (RAM, DRAM oder SRAM) stehen.

Ein weiterer Aspekt der Erfindung besteht darin, dass eine Nutzung eines Chip-internen Speichers flexibel auf Plattformen ermöglicht werden kann, die ein komplexes Betriebssystem wie z.B. Linux verwenden. Ein ausgeführtes Nutzerprogramm (Prozess im User Space) verfügt durch die Erfindung über einen Speicherbereich, der nicht in einem Chip-externen Arbeitsspeicherbaustein (RAM) vorliegt, sondern intern. Dadurch kann das Echtzeitverhalten bei einem Speicherzugriff verbessert werden, und es kann das Schutzniveau gegenüber lokalen, physikalischen Angreifern erhöht werden, da kritische Daten wie Schlüssel oder Passwörter nicht in einem relativ leicht zugreifbaren Arbeitsspeicherbaustein (dem CPU externen Arbeitsspeicher) stehen.

Bei herkömmlichen externen Arbeitsspeichern kann lediglich, z.B. über einen mlock-Syscall, verhindert werden, dass ein bestimmter Arbeitsspeicherbereich auf die Festplatte (SSD) ausgelagert wird. Die externen Arbeitsspeicherinhalte liegen jedoch in RAM-Speicherbausteinen vor, die durch einen lokalen Angreifer relativ einfach auslesbar sind (z.B. durch Buszugriff, durch Cold-Boot-Angriff).

Es müssen dadurch durch die vorliegende Erfindung außerdem keine speziellen Verschlüsselungsverfahren durch das User-Space-Programm (Nutzerprogramm) realisiert werden, um sensible Daten zur Laufzeit zu verschlüsseln und zu entschlüsseln. Außerdem kann es nicht wie bei bekannten Lösungen dazu kommen, dass zumindest kurzzeitig sensible Daten im Klartext im separaten Arbeitsspeicher stehen. Auch ist für eine Umsetzung, anders als bei Confidential-Computing-Enklaven wie z.B. Intel SGX keine Speicherverschlüsselung eines Chip-externen Speichers und die dafür notwendige Schlüsselmanagement-Funktionen und Security-Infrastruktur-Funktionen zum Signieren von Enklaven-Code erforderlich.

In einer Weiterbildung der Erfindung ist der interne Arbeitsspeicher ausgebildet als:
- ein Level-1-Cache und/oder
- ein Level-2-Cache und/oder
- ein Level-3-Cache und/oder
- ein On-Chip Random-access memory.

Der On-Chip Random-access memory (On-Chip RAM) ist auch als In-Chip Random-access memory (In-Chip RAM) bezeichenbar.

In einer weiteren Weiterbildung der Erfindung ist der interne Arbeitsspeicher ausgebildet, während einer Ausführung des Nutzerprogramms dynamisch angefordert zu werden.

Daraus ergibt sich der Vorteil, dass der interne Arbeitsspeicher durch das erste Nutzerprogramm dynamisch verwendbar ist, wobei der interne Arbeitsspeicher im Vergleich zu einem dem Prozessor externem oder separaten Arbeitsspeicher insbesondere besonders hohen Anforderungen bezüglich Sicherheit oder Echtzeitfähigkeit genügt.

In einer weiteren Weiterbildung der Erfindung ist der interne Arbeitsspeicher ausgebildet, nur für das erste Nutzerprogramm über den Betriebssystemaufruf angefordert zu werden.

Das Betriebssystem ist somit ausgebildet, nur dem ersten Nutzerprogramms den Zugriff auf den internen Arbeitsspeicher über einen Betriebssystemaufruf bereitzustellen.

Dass der interne Arbeitsspeicher ausgebildet ist, nur für das erste Nutzerprogramm über den Betriebssystemaufruf angefordert zu werden, bedeutet, dass in dem internen Arbeitsspeicher fest ein Arbeitsspeicherbereich für das erste Nutzerprogramm reserviert ist. Der Speicherbereich ist ausgebildet, für nichts anderes genutzt, verwendet und/oder angefordert zu werden als für das erste Nutzerprogramm. Bei einem Anfordern durch ein berechtigtes Nutzerprogramm über einen Betriebssystemaufruf überprüft das Betriebssystem die Berechtigung des Nutzerprogramms, d.h. ob das Nutzerprogramm überhaupt auf den Prozessor-internen Arbeitsspeicher zugreifen darf und auf welchen Speicherbereich des Prozessor-internen Arbeitsspeichers.

Es kann weiterhin eine Mehrzahl von ersten Nutzerprogrammen vorliegen, wobei die ersten Nutzerprogramme unterschiedliche Berechtigungen zum Zugriff auf den internen Arbeitsspeicher aufweisen. Es ist möglich, dass nur manche Nutzerprogramme auf den internen Arbeitsspeicher zugreifen können. Es ist möglich, dass Nutzerprogramme auf unterschiedliche Teilbereiche des internen Arbeitsspeichers zugreifen können. Die Teilbereiche unterschiedlicher Nutzerprogramme können dabei disjunkt oder überlappend oder identisch (shared memory) sein.

Insbesondere ist somit auch eine Realisierung, bei der zwei erste Nutzerprogramme (User-Space-Applikationen), insbesondere auch mehrere erste Nutzerprogramme, über eine Betriebssystemfunktionalität (Funktionalität im OS) unter Nutzung des internen Arbeitsspeichers (insbesondere eines In-Chip-Shared-Memorys) geschützt sensible Daten austauschen, denkbar.

Dadurch kann erreicht werden, dass zwei erste Nutzerprogramme sicher und mit hohen Echtzeiteigenschaften untereinander kommunizieren können, wobei das Betriebssystem (OS) verwaltet und einschränkt, ob dies zulässig ist und welchen Teilbereich des internen Arbeitsspeichers (Chip-internen Speichers) die ersten Nutzerprogramme (ersten Applikationen) verwenden können.

In einer weiteren Weiterbildung der Erfindung ist Berechtigung abhängig von:
- einer Nutzer-ID und/oder
- einer Gruppen-ID und/oder
- einem Sicherheitslabel und/oder
- einer Linux capability und/oder
- einer Linux cgroup.

Linux cgroup ist auch als eine "control group" bezeichenbar.

In einer weiteren Weiterbildung der Erfindung ist durch die Berechtigung ein Umfang, in dem der interne Arbeitsspeicher ausgebildet ist, von dem ersten Nutzerprogramm erfolgreich angefordert zu werden, bestimmt. Ein Anfordern des internen Arbeitsspeichers für ein Nutzerprogramm, dem keine Berechtigung zugehörig ist, wäre ohne Erfolg. Der Aufruf des Betriebssystems könnte somit ohne Berechtigung stattfinden, wäre aber erfolglos und der interne Arbeitsspeicher könnte nicht verwendet werden.

Abhängig von Berechtigung (wiederum abhängig von User ID, Group ID, Security Label, Capability, cgroup) ist somit definiert, in welchem Umfang der interne Arbeitsspeicher (insbesondere ein On-Chip-Speicher) genutzt werden kann.

Dabei definiert Umfang, welche Teilbereiche und/oder welches Volumen, von dem internen Arbeitsspeicher ausgebildet ist, von dem ersten Nutzerprogramm erfolgreich angefordert zu werden. Durch den Umfang wird somit eine Speichergröße definiert.

In einer weiteren Weiterbildung der Erfindung weist das Betriebssystem auf:
einen zweiten interne Arbeitsspeicher, wobei der zweite interne Arbeitsspeicher ausgebildet ist, nur von dem ersten Nutzerprogramm angefordert zu werden.

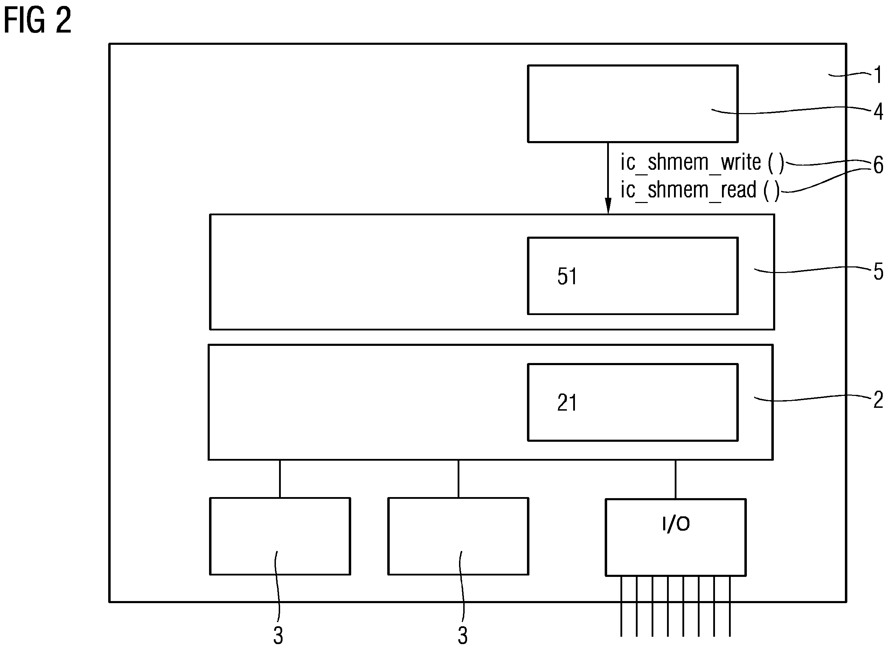

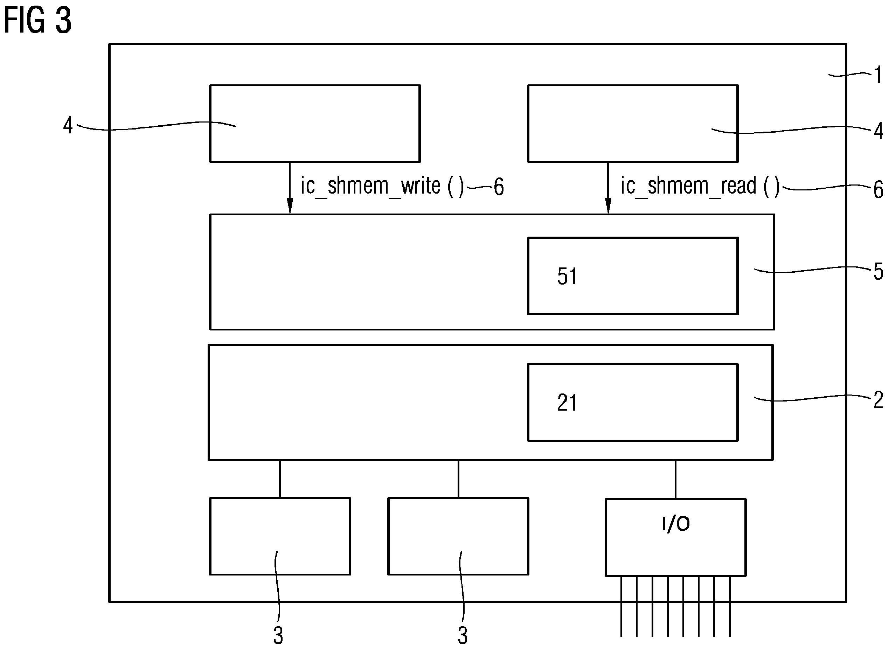

Weiterhin wird somit für das erste Nutzerprogramm (Prozess, Applikation, App), das einen solchen speziellen CPU-internen Arbeitsspeicher nutzen darf, vorzugsweise der vom Betriebssystem (OS) verwaltete Prozesskontext zumindest teilweise ebenfalls nur in einem OS-internen Speicher vorgehalten (siehe Fig. 2 und 3).

Alternativ werden bei einem Prozesswechsel (Wechsel zu einer Verarbeitung des ersten Nutzerprogramms) die aktuellen Registerinhalte der CPU durch das Betriebssystem (OS) im separaten Arbeitsspeicher (RAM des Compute Device außerhalb der CPU) abgelegt.

In einer weiteren Weiterbildung der Erfindung weist der interne Arbeitsspeicher eine Speicherkapazität von 1 Kilobyte, 10 Kilobyte oder 100 Kilobyte bis 5 Megabyte auf.

Die Größe des Speicherbereichs (insbesondere eines In-Chip-Memories) des internen Arbeitsspeichers ist üblicherweise klein (einige Kilobyte oder wenige Megabyte). Vorzugsweise kann daher über Betriebssystem-Berechtigungen, z.B. Linux Capabilities oder über Control-Groups (cgroup) festgelegt werden, ob ein bestimmter Nutzer In-Chip-Memory belegen kann, und welche Speichergröße er insgesamt, d.h. übergreifend über alle unter seinem Nutzer laufenden Prozesse, belegen kann. Dabei werden vorzugsweise mehrere Arten von Chip-Internen Speichern unterschieden (Level-1-Cache, Level-2-Cache, Level-3-Cache) .

In einer weiteren Weiterbildung der Erfindung weist der interne Arbeitsspeicher eine kryptographische Speicherverschlüsselung auf.

Weiterhin ist es möglich, dass der In-Chip-Speicherinhalt, welcher auf dem internen Arbeitsspeicher gespeichert ist, kryptographisch verschlüsselt ist. Dies kann durch das erste Nutzerprogramm, insbesondere eine Applikation (User-Space-Prozess), selbst erfolgen und/oder durch ein Betriebssystem und/oder durch eine Speicherverschlüsselungseinheit des Prozessors.

In einer weiteren Weiterbildung der Erfindung weist die Recheneinheit außerdem einen separaten Arbeitsspeicherbaustein auf, wobei das Betriebssystem ausgebildet ist, den separaten Arbeitsspeicher für das erste Nutzerprogramm und für das zweite Nutzerprogramm anzufordern.

Die bedeutet, dass das erste Nutzerprogramm und das zweite Nutzerprogramm bei einer Ausführung jeweils in dem separaten Arbeitsspeicherbaustein vorliegen und Arbeitsdaten in dem separaten Arbeitsspeicherbaustein, insbesondere durch einen direkten Speicherzugriff, ablegen.

Das Betriebssystem ist somit ausgebildet, das erste und das zweite Nutzerprogramm in dem separaten Arbeitsspeicher auszuführen.

Die Erfindung umfasst außerdem eine Recheneinheit aufweisend ein erfindungsgemäßes Betriebssystem. Die Recheneinheit ist insbesondere als ein Computersystem, ein Computer-Gerät und/oder eine Compute device ausgebildet.

In einer Weiterbildung der Erfindung weist die erfindungsgemäße Recheneinheit außerdem ein Prozessorbaustein auf. Der Prozessorbaustein weist einen internen Arbeitsspeicher auf. Für den Prozessorbaustein und dessen internen Arbeitsspeicher gelten die Merkmale, wie sie für den Prozessorbaustein und dessen internen Arbeitsspeicher im Zusammenhang mit dem erfindungsgemäßen Betriebssystem offenbart sind.

Die erfindungsgemäße Recheneinheit weist insbesondere außerdem auf:
- einen externen Speicherbaustein und/oder
- eine Eingabeschnittstelle und/oder
- eine Ausgabeschnittstelle.

Der externe Speicherbausteinen ist insbesondere ausgebildet als ein CPU-externer Arbeitsspeicher, insbesondere ein RAM, oder eine Festplatte, insbesondere eine SSD.

Die Erfindung umfasst außerdem ein Verfahren ausgeführt von Betriebssystem zum Zugreifen auf einen internen Arbeitsspeicher eines Prozessorbaustein einer Recheneinheit durch ein erstes Nutzerprogramm,
mit den Schritten:
- Ein Ausführen des ersten Nutzerprogramm, wobei dem ersten Nutzerprogramm eine Berechtigung zugeordnet ist,
- ein Ausgeben eines Betriebssystemaufrufs für das erste Nutzerprogramm, wobei der Betriebssystemaufrufs die Berechtigung enthält, und
- ein Zugreifen auf den internen Arbeitsspeicher durch das ersten Nutzerprogramm,
   wobei das Zugreifen auf den internen Arbeitsspeicher die Berechtigung des ersten Nutzerprogramms voraussetzt.

In einer Weiterbildung der Erfindung ist das erfindungsgemäße Verfahren zum Zugreifen auf einen internen Arbeitsspeicher eines Prozessorbaustein einer erfindungsgemäßen Recheneinheit ausgebildet.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: eine schematische Darstellung einer ersten Ausführung eines Betriebssystems für eine Recheneinheit mit einem Prozessor mit internem Arbeitsspeicherbereich für ein bestimmtes Nutzerprogramm,
- Fig. 2: eine schematische Darstellung einer zweiten Ausführung eines erfindungsgemäßen Betriebssystems, und
- Fig. 3: eine schematische Darstellung einer dritten Ausführung eines erfindungsgemäßen Betriebssystems.

### DETAILLIERTE BESCHREIBUNG DER ERFINDUNG

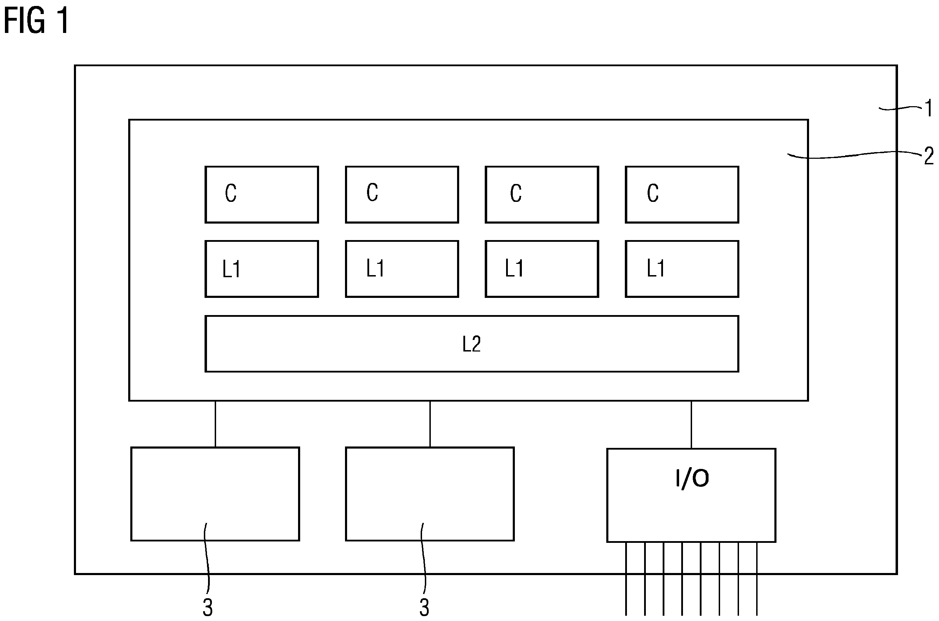

Fig. 1 zeigt Hardware-Komponenten 2, 3, C, L1, L2, I/O einer Recheneinheit 1, insbesondere einer Recheneinheit 1 oder eines Computer-Gerätes 1, mit einem Prozessor 2, insbesondere einem Prozessorbaustein 2 oder einer CPU 2, externen Speicherbausteinen 3, insbesondere Arbeitsspeicher RAM und/oder Festplatte SSD, und einer Ein-/Ausgabeschnittstelle I/O.

Der dargestellte Prozessorbaustein 2 verfügt über vier CPU-Cores C, denen jeweils ein Level-1-Cache L1 zugeordnet ist, sowie einen Level-2-Cache L2. Der Level-1-Cache L1 und der Level-2-Cache L2 sind auch als In-Chip-Memory oder On-Chip-Memory bezeichenbar. In einer anderen Variante (nicht dargestellt) kann auch ein separater In-Chip-Memory vorgesehen sein, der im Prozessorbaustein 2 integriert ist.

Auf diesem Computer-Gerät 1 wird ein Betriebssystem (nicht dargestellt, siehe hierfür Fig. 2 und 3) ausgeführt, das internen Speicher L1, L2 der CPU 2, vorzugsweise im Last-Level-Cache, hier L2-Cache L2, reserviert und als den erfindungsgemäßen Speicherbereich, insbesondere als Spezialspeicher, verwaltet. Es stellt den Chip-internen Speicherbereich/Spezialspeicher (Teil des internen Speichers L1, L2) über eine Betriebssystemschnittstelle ausgeführten User-Space-Applikationen (nicht dargestellt, siehe hierfür Fig. 2 und 3) bereit.

Fig. 2 zeigt eine Realisierung einer Recheneinheit 1, bei der mindestens ein Nutzerprogramm 4, insbesondere eine User-Space-Applikation 4, über eine Funktionalität des Betriebssystems 5, auch als Operating System 5 oder OS 5 bezeichenbar, sensible Daten in einem In-Chip-Memory 21 des Prozessors 2 geschützt ablegt und wieder zurückliest. Das Betriebssystem 5 überprüft, ob dies zulässig ist und welchen Teilbereich/Speicherbereich des Chip-internen Speichers 21 die Applikationen 4 verwenden können.

Weiterhin wird für das mindestens eine Nutzerprogramm 4 (Prozess 4, Applikation 4, App 4), das oder die einen solchen speziellen CPU-internen Arbeitsspeicher 21 nutzen dürfen, somit vorzugsweise der vom Betriebssystem 5 verwaltete Prozesskontext zumindest teilweise ebenfalls nur in dem internen Speicher 51 vorgehalten.

Auch vorhanden sind externe Speicherbausteine 3, insbesondere Arbeitsspeicher RAM und/oder Festplatte SSD und eine Ein-/Ausgabeschnittstelle I/O.

Dabei kann ein spezieller Betriebssystemaufruf 6, insbesondere syscall "ic_shmem_write" und "ic_shmem_read", der üblicherweise von einem Anwenderprogramm 4 über die libc-Bibliothek aufgerufen wird, vorbereitet sein, z.B. ic_malloc() für eine In-CPU-Memory-Allokation, oder ic_shmem_open() für das Anfordern eines In-CPU-Shared-Memory-Speicherbereichs 21 für eine CPU-interne Interprozesskommunikation.

Da auf einen solchen CPU-internen Speicher 21 bei manchen Realisierungen nicht über normale Speicherzugriffsarten direkt zugegriffen werden kann (z.B. über einen Adresszeiger / Pointer) kann als Pointer-Wert eine ungültige virtuellen Speicheradresse zugeordnet werden, die bei einem regulären Zugriff zu einem "Page Fault" führt.

Es können Basis-Rechenoperationen vom Betriebssystem 2 über Betriebssystemaufrufe 6 (syscalls) bereitgestellt werden, die grundlegende arithmetische und logische Operationen auf die im CPU-internen Arbeitsspeicher 21 abgelegten Daten zulassen (z.B. ADD, SUB, MUL, DIV, AND; OR, XOR, NOT, SHL, SHR, ROL, ROR). Weiterhin sind sinnvollerweise Lade-Operation (LOAD, STORE) zur Übertragung von In-CPU-Speicherinhalten 21 zum regulären Arbeitsspeicher 3 (extern der CPU 2) vorgesehen. Vorzugsweise sind weiterhin spezielle Crypto-Operationen vorgesehen, die auf die im CPU-internen Speicher 21 hinterlegten Daten angewandt werden (z.B. AES, SHA256, HMAC). Dabei kann ein einzelner Befehl durch einen einzelnen Systemaufruf (syscall) durchgeführt werden. Vorzugsweise kann eine Mehrzahl von durchzuführenden Operationen bei einem Syscall übergeben werden. In einer Weiterbildung kann z.B. ein Bytecode übergeben werden, der durch eine virtuelle Maschine des Betriebssystems mit den CPU-internen, dem aufrufenden User-Space-Prozess 4 zugeordneten Speicherbereich des Arbeitsspeichers 21 ausgeführt wird. Ein im User-Space ausgeführter Prozess 4 kann dadurch einen Chip-internen Speicher 21 nutzen und dabei durch einen Bytecode vorgebbare Berechnungen in diesem Chip-internen Speicher Chip-intern durchführen lassen.

Fig. 3 zeigt eine Realisierung einer Recheneinheit 1, bei der zwei User-Space-Applikationen 4 über eine Funktionalität des Betriebssystem 5 unter Nutzung eines In-Chip-Shared-Memory 21 des Prozessors 2 geschützt sensible Daten austauschen (durch spezielle Systemaufrufe 6, insbesondere syscall "ic_shmem_write" 6 und "ic_shmem_read" 6). Dadurch kann erreicht werden, dass zwei Nutzerprogramme 4 sicher und/oder mit hohen Echtzeiteigenschaften untereinander kommunizieren können, wobei das Betriebssystem 5 verwaltet und einschränkt, ob dies zulässig ist und welchen Teilbereich des Chip-internen Speichers 21 die Applikationen 4 verwenden können.

Weiterhin wird für das mindestens eine Nutzerprogramm 4 (Prozess 4, Applikation 4, App 4), das oder die einen solchen speziellen CPU-internen Arbeitsspeicher 21 nutzen dürfen, somit vorzugsweise der vom Betriebssystem 5 verwaltete Prozesskontext zumindest teilweise ebenfalls nur in dem internen Speicher 51 vorgehalten.

Auch vorhanden sind externe Speicherbausteine 3, insbesondere Arbeitsspeicher RAM und/oder Festplatte SSD und eine Ein-/Ausgabeschnittstelle I/O.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Betriebssystem (5) für eine Recheneinheit (1), wobei das Betriebssystem (5) ausgebildet ist, ein erstes Nutzerprogramm (4) und ein zweites Nutzerprogramm auszuführen,
wobei dem ersten Nutzerprogramm (4) eine Berechtigung zugeordnet ist, wobei dem zweiten Nutzerprogramm die Berechtigung nicht zugeordnet ist, wobei die Recheneinheit (1) einen Prozessorbaustein (2) mit einem internen Arbeitsspeicher (L1, L2, 21) aufweist, wobei das Betriebssystem (5) ausgebildet ist, dem ersten Nutzerprogramm einen Zugriff auf den internen Arbeitsspeicher (L1, L2, 21) über einen Betriebssystemaufruf (6) bereitzustellen, wobei der Zugriff auf den internen Arbeitsspeicher (L1, L2, 21) die Berechtigung des ersten Nutzerprogramms (4) voraussetzt.

2. Betriebssystem (5) nach Anspruch 1,
wobei der interne Arbeitsspeicher ausgebildet ist als:
- ein Level-1-Cache und/oder
- ein Level-2-Cache und/oder
- ein Level-3-Cache und/oder
- ein On-Chip Random-access memory.

3. Betriebssystem (5) nach einem der vorhergehenden Ansprüche, wobei der interne Arbeitsspeicher (L1, L2, 21) ausgebildet ist, während einer Ausführung des ersten Nutzerprogramms (4) dynamisch angefordert zu werden.

4. Betriebssystem (5) nach einem der vorhergehenden Ansprüche, wobei der interne Arbeitsspeicher (L1, L2, 21) ausgebildet ist, nur für das erste Nutzerprogramm (4) über den Betriebssystemaufruf (6) angefordert zu werden.

5. Betriebssystem (5) nach Anspruch 4, wobei die Berechtigung abhängig ist von:
- einer Nutzer-ID und/oder
- einer Gruppen-ID und/oder
- einem Sicherheitslabel und/oder
- eine Linux capability und/oder
- einer Linux cgroup.

6. Betriebssystem (5) nach Anspruch 4 oder 5, wobei durch die Berechtigung ein Umfang, in dem der interne Arbeitsspeicher ausgebildet ist, von dem ersten Nutzerprogramm (4) erfolgreich angefordert zu werden, bestimmt ist.

7. Betriebssystem (5) nach einem der vorhergehenden Ansprüche, wobei das Betriebssystem (5) aufweist:
einen zweiten interne Arbeitsspeicher (51), wobei der zweite interne Arbeitsspeicher ausgebildet ist, nur von dem ersten Nutzerprogramm (4) angefordert zu werden.

8. Betriebssystem (5) nach einem der vorhergehenden Ansprüche, wobei der interne Arbeitsspeicher (21) eine Speicherkapazität von von:
- kleiner 1 Kilobyte oder
- kleiner 10 Kilobyte oder
- kleiner 100 Kilobyte oder
- kleiner 5 Megabyte
aufweist.

9. Betriebssystem (5) nach einem der vorhergehenden Ansprüche, wobei der interne Arbeitsspeicher (21) eine kryptographische Speicherverschlüsselung aufweist.

10. Betriebssystem (5) nach Anspruch 1,
wobei die Recheneinheit (1) außerdem einen separaten Arbeitsspeicherbaustein (3) aufweist, wobei das Betriebssystem (5) ausgebildet ist, den separaten Arbeitsspeicher (3) für das erste Nutzerprogramm (4) und für das zweite Nutzerprogramm anzufordern.

11. Recheneinheit (1) aufweisend ein Betriebssystem (5) nach einem der vorherigen Ansprüche.

12. Recheneinheit (5) nach Anspruch 11, außerdem aufweisend:
- einen Prozessorbaustein (2), dieser aufweisend einen internen Arbeitsspeicher (21).

13. Verfahren zum Zugreifen auf einen internen Arbeitsspeicher (L1, L2, 21) eines Prozessorbaustein (2) einer Recheneinheit (1) durch ein erstes Nutzerprogramm (4),
mit den Schritten:
- Ein Ausführen des ersten Nutzerprogramm (4), wobei dem ersten Nutzerprogramm (4) eine Berechtigung zugeordnet ist,
- ein Ausgeben eines Betriebssystemaufrufs (6) für das erste Nutzerprogramm (4), wobei der Betriebssystemaufrufs (6) die Berechtigung enthält, und
- ein Zugreifen auf den internen Arbeitsspeicher (L1, L2, 21) durch das ersten Nutzerprogramm (4),
wobei das Zugreifen auf den internen Arbeitsspeicher (L1, L2, 21) die Berechtigung des ersten Nutzerprogramms (4) voraussetzt.

14. Verfahren nach Anspruch 13 zum Zugreifen auf einen internen Arbeitsspeicher (L1, L2, 21) eines Prozessorbaustein (2) einer Recheneinheit (1) nach einem der Ansprüche 11 oder 12.
